# EUROPÄISCHE PATENTANMELDUNG

(11) **EP 4 059 703 A1**
(43) Veröffentlichungstag der Anmeldung: **21.09.2022**
(21) Anmeldenummer: 21163449.8
(22) Anmeldetag: 18.03.2021
(51) Int. Cl.: B32B 1/08, A23L 7/109, B32B 7/12, B32B 27/08, B32B 27/32, B65D 65/40, B65D 85/22

(54) **VERPACKUNG FUER PASTA**

(71) Anmelder: Herbert Ospelt Anstalt, 9487 Bendern (LI)
(72) Erfinder: Frick, Sylvester, 9495 Triesen (LI)
(74) Vertreter: Kaminski Harmann

(57) **Zusammenfassung**

Die vorliegende Erfindung betrifft eine Verpackung für Pasta, hergestellt aus einer schweissbaren Folie und aufweisend eine schlauchbildende Längsschweissnaht, eine erste Querschweissnaht und zweite Querschweissnaht, wobei die zwei Querschweissnähte gegenüberliegende Seitenränder der Verpackung bilden, wobei die Folie, insbesondere als Monomaterialverbund, Polypropylen und eine Sperrschicht aus Aluminiumoxid oder Siliciumdioxid aufweist. Die Erfindung betrifft weiterhin die darin verpackten Pasta und ein Verfahren zum Verpacken von Pasta.

## Beschreibung

### GEBIET DER ERFINDUNG

Die vorliegende Erfindung betrifft eine Verpackung für Pasta, insbesondere frische Pasta. Die Erfindung betrifft weiterhin die darin verpackten Pasta, insbesondere frischen Pasta, sowie ein Verfahren zum Verpacken von Pasta, insbesondere frischer Pasta.

### HINTERGRUND DER ERFINDUNG

Frische Pasta, auf Italienisch auch "pasta fresca" genannt, erfreuen sich immer grösserer Beliebtheit, weil sie im Vergleich zu getrockneten und dadurch haltbareren Nudeln mit einem verbessertem Geschmack, Aroma und Aussehen aufwarten. Auch ist die Zubereitungszeit teils stark verkürzt, was frische Pasta quasi zum Fertigprodukt macht. Frische Pasta sind Nudelwaren, die bei ihrer Herstellung keinen oder zumindest keinen signifikanten Trocknungsschritt durchlaufen und müssen wegen ihres relativ hohen Wassergehaltes bis zur Zubereitung stets gekühlt aufbewahrt werden. Unter frischen Pasta sind also beispielsweise zu verstehen: frische Teigware, ungefüllte Nudeln wie Spaghetti, Tagliatelle, Fettuccine, Gnocchi, Schupfnudeln, Spätzle, aber auch gefüllte Nudeln wie Tortelloni und Ravioli. Abgesehen von möglichen diversen käse- und/oder fleischbasierten Füllungen, steigert auch ein etwaiger Eigehalt im Teig nochmals den Bedarf der Kühlung und einer haltbarkeitsverlängernden Verpackung. Wie oben angedeutet, sind unter frischen Pasta auch teilweise frische, insbesondere halb-frische Pasta bzw. Nudeln gemeint. Solche halb- oder teil-frischen Pasta durchlaufen nur einen teilweisen Trocknungsschritt.

Zum Erzielen einer möglichst hohen Haltbarkeit von frischen Pasta sind besondere Anforderungen an die Verpackung gestellt, die bislang im Widerspruch zum Nachhaltigkeitsgedanken standen. Aus dem Stand der Technik sind Verpackungen für frische Pasta bekannt, die primär aus Polyethylen und/oder (orientiertem) Polyamid gefertigt sind. Ein für Pasta bekannter, beispielhafter Folienverbund setzt sich etwa aus einer Papier- (für eine natürlich wirkende Optik), Polyethylen-, orientiertes-Polyamid- und einer Polyethylen-Schicht zusammen. In manchen Folienverbundverpackungen wird auch als Barriere Ethylen-Vinylacetat verwendet.

Ein bedeutender Nachteil bekannter Verpackungen für Pasta ist also, dass sie nicht recyclebar bzw. rezyklierbar sind. Insbesondere sind bekannte Verpackungen für frische Pasta zudem materialbedingt nicht stabil genug, was etwa bei Standbodenbeuteln zu Schwierigkeiten führen kann und zusätzliche, die Struktur verstärkende Schweissungen beim Herstellen der Verpackung nötig macht, um das Stabilitätsproblem etwas abzumildern.

### AUFGABE DER ERFINDUNG

Daher ist es eine Aufgabe der Erfindung, eine verbesserte Verpackung für Pasta, insbesondere frische, bereitzustellen, die den oben genannten Problemen Rechnung trägt. Insbesondere ist es Aufgabe der vorliegenden Erfindung, eine Verpackung für Pasta, insbesondere frische Pasta, bereitzustellen, deren Material wiederverwertet werden kann, eine verbesserte Haltbarkeit der Nudeln gewährleistet und/oder die eine verbesserte Stabilität für ein aufrechtes Stehen der Verpackung bietet.

### ZUSAMMENFASSUNG DER ERFINDUNG

Die vorliegende Erfindung betrifft eine Verpackung für frische Pasta, hergestellt aus einer schweissbaren Folie und aufweisend eine schlauchbildende Längsschweissnaht, eine erste Querschweissnaht und zweite Querschweissnaht, wobei die zwei Querschweissnähte gegenüberliegende Seitenränder der Verpackung bilden, wobei die Folie Polypropylen und eine Sperrschicht aus Aluminiumoxid oder Siliciumdioxid aufweist.

Eine Ausführungsform der Verpackung weist einen Standboden auf, wobei die Längsschweissnaht entlang einer ersten Kante des Standbodens verläuft, und wobei die Querschweissnähte senkrecht zur Längsschweissnaht verlaufen.

In einer Ausführungsform der Verpackung hat die Sperrschicht eine Dicke von zwischen 5 und 30 nm, und wobei die Folie eine erste Polypropylen-Schicht mit einer Dicke von zwischen 5 und 30 µm aufweist.

In einer Ausführungsform der Verpackung ist die Sperrschicht auf die erste Polypropylen-Schicht aufgetragen.

In einer Ausführungsform der Verpackung ist die erste Polypropylen-Schicht biaxial orientiert.

In einer Ausführungsform der Verpackung weist die Folie eine zweite Polypropylen-Schicht mit einer Dicke von zwischen 30 und 200 µm auf, insbesondere 100 oder 80 µm.

In einer Ausführungsform der Verpackung ist die zweite Polypropylen-Schicht mittels einer Kleber-Schicht mit der ersten Polypropylen-Schicht verbunden.

In einer Ausführungsform der Verpackung weist die Folie eine Druckfarbe-Schicht (a) zwischen der ersten Polypropylen-Schicht und der zweiten Polypropylen-Schicht oder (b) mittelbar oder unmittelbar an einer der zweiten Polypropylen-Schicht abgewandten Seite der ersten Polypropylen-Schicht auf.

In einer Ausführungsform der Verpackung weist die Folie eine Mattlack-Schicht auf, die auf die erste Polypropylen-Schicht aufgetragen ist.

In einer Ausführungsform der Verpackung weist die Verpackung eine Sauerstoffdurchlässigkeit von unter 2cm³/(m² x 24h x bar) bei 23°C und 75% relativer Feuchtigkeit auf, insbesondere unter 1,5cm³/(m² x 24h x bar).

In einer Ausführungsform der Verpackung weist die Verpackung eine Wasserdampfdurchlässigkeit von unter 1g/(m² x 24h) bei 23°C und 90% relativer Feuchtigkeit auf, insbesondere unter 0,5g/(m² x 24h).

In einer Ausführungsform der Verpackung weist die Verpackung eine W-Falte am Standboden auf, wobei die W-Falte an den zwei gegenüberliegenden Seitenrändern jeweils zusammengeschweisst ist.

In einer Ausführungsform der Verpackung sind Querschweissnähte mit einem ersten Quersiegelbackenpaar und einem zweiten Quersiegelbackenpaar hergestellt, wobei jede Quersiegelbacke der beiden Quersiegelbackenpaare jeweils zwei oder drei Längsstege aufweist, und wobei beim Herstellen der Querschweissnähte die Längsstege, die Folienlagen einklemmend, jeweils frontal gegeneinanderstossen, sodass die Querschweissnähte zwei bzw. drei Rillen aufweisen. Allerdings können die Quersiegelbacken der Quersiegelbackenpaare jeweils auch nur einen Längssteg aufweisen, wobei beim Herstellen der Querschweissnähte die Längsstege, die Folienlagen einklemmend, jeweils frontal gegeneinanderstossen, wodurch die Querschweissnähte dann nur eine Rille aufweist. Bei Anwendung nur eines Längssteges, der nur eine Rille in der jeweiligen Querschweissnaht hervorruft erfolgt der Schweissvorgang mit weniger Energie und für eine längere Dauer.

Die Erfindung betrifft auch Pasta, welche in einer Verpackung gemäss der Beschreibung hierin verpackt sind.

Ausserdem betrifft die Erfindung ein Verfahren zum Verpacken von Pasta in einer Verpackung gemäss der Beschreibung hierin, aufweisend die Schritte:

Kontinuierliche Zuführung der Folie und während der Zuführung:

Umschlagen der Folie, sodass ein erster Längsrand der Folie mit einem zweiten Längsrand der Folie zusammengeführt wird,

Herstellen der schlauchbildenden Längsschweissnaht an dem ersten und zweiten Längsrand der Folie, wobei die Längsschweissnaht eine erste Kante des Standbodens bildet,

Falzen einer zweiten Kante des Standbodens,

Falten einer W-Falte am Standboden durch Eindrücken eines Werkzeugs zwischen der ersten und zweiten Kante,

Herstellen der ersten Querschweissnaht mit einem ersten Quersiegelbackenpaar, wobei die beiden Quersiegelbacken des ersten Quersiegelbackenpaars jeweils zwei oder drei Längsstege aufweisen, und wobei beim Herstellen der ersten Querschweissnaht die Längsstege des ersten Quersiegelbackenpaars, die Folienlagen einklemmend, frontal aufeinanderstossen,

Befüllen der Verpackung mit den Pasta,

Herstellen der zweiten Querschweissnaht mit einem zweiten Quersiegelbackenpaar, wobei die beiden Quersiegelbacken des zweiten Quersiegelbackenpaars jeweils zwei oder drei Längsstege aufweisen, und wobei beim Herstellen der zweiten Querschweissnaht die Längsstege des zweiten Quersiegelbackenpaars, die Folienlagen einklemmend, frontal aufeinanderstossen und

Abtrennen der Verpackung neben der zweiten Querschweissnaht.

### KURZE BESCHREIBUNG DER ZEICHNUNGEN

Weitere Vorteile der vorliegenden Erfindung sind aus der detaillierten Beschreibung und den Zeichnungen ersichtlich.
Figuren 1 und 2 zeigen jeweils eine perspektivische Ansicht einer Verpackung gemäss einer Ausführungsform der vorliegenden Erfindung;
Figur 3 zeigt eine perspektivische Ansicht eines Teils der Verpackung aus den Figuren 1 und 2;
Figuren 4 und 5 zeigen perspektivische Ansichten der Verpackung aus Figuren 1-3 jeweils im Schnitt, wobei die Verpackung in Figur 4 intransparent und in Figur 5 transparent gezeigt ist;
Figur 6 zeigt Komponenten einer Fertigungsmaschine für die erfindungsgemässe Verpackung; und
Figur 7 zeigt schematisch einen Folienaufbau einer Verpackung gemäss einer Ausführungsform der Erfindung.

### DETAILLIERTE BESCHREIBUNG DER ZEICHNUNGEN

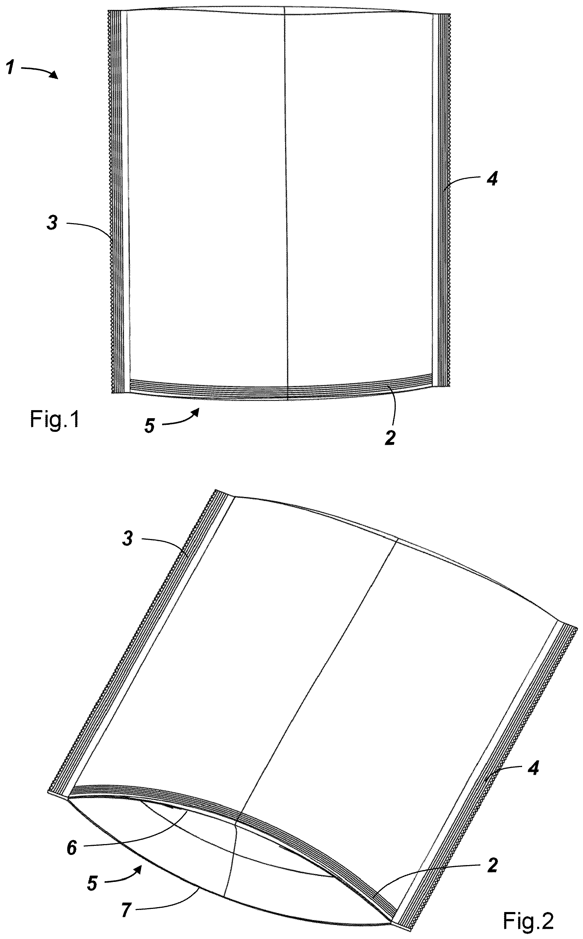

Figur 1 zeigt ein Ausführungsbeispiel einer erfindungsgemässen Verpackung 1 für Pasta, insbesondere frische Pasta. Zu sehen ist hier die schlauchbildende Längsschweissnaht 2 am Standboden 5, sowie eine erste Querschweissnaht 3 und zweite Querschweissnaht 4, wobei die zwei Querschweissnähte 3 und 4 gegenüberliegende Seitenränder der Verpackung 1 bilden. Die Begriffe "Längs-" und "Quer-" beziehen sich auf die Richtung der kontinuierlichen Zuführung der Folie beim Produktionsprozess, d.h. die Längsschweissnaht verläuft längs zum aus der Folie geformten Schlauch und die Querschweissnähte quer dazu.

Die schweissbare Folie weist erfindungsgemäss Polypropylen und eine Sperrschicht aus Aluminiumoxid oder Siliciumdioxid auf. Dadurch ist die Verpackung recyclebar bzw. rezyklierbar und eignet sich dennoch für frische Pasta unter Einhaltung der Anforderungen an die Haltbarkeit und Hygiene. Die erfindungsgemässe Verpackung ist daher besonders umweltfreundlich. Die Sperrschicht ist vernachlässigbar dünn hinsichtlich der Rezyklierung.

Wie Figur 2 zeigt, weist die Verpackung 1 einen Standboden 5 auf, wobei die Längsschweissnaht 2 entlang einer ersten Kante 6 des Standbodens 5 verläuft, und wobei die Querschweissnähte 3 und 4 senkrecht zur Längsschweissnaht 2 verlaufen. Eine der ersten Kante 6 gegenüberliegende zweite Kante 7 ist ebenfalls Bestandteil des Standbodens 5.

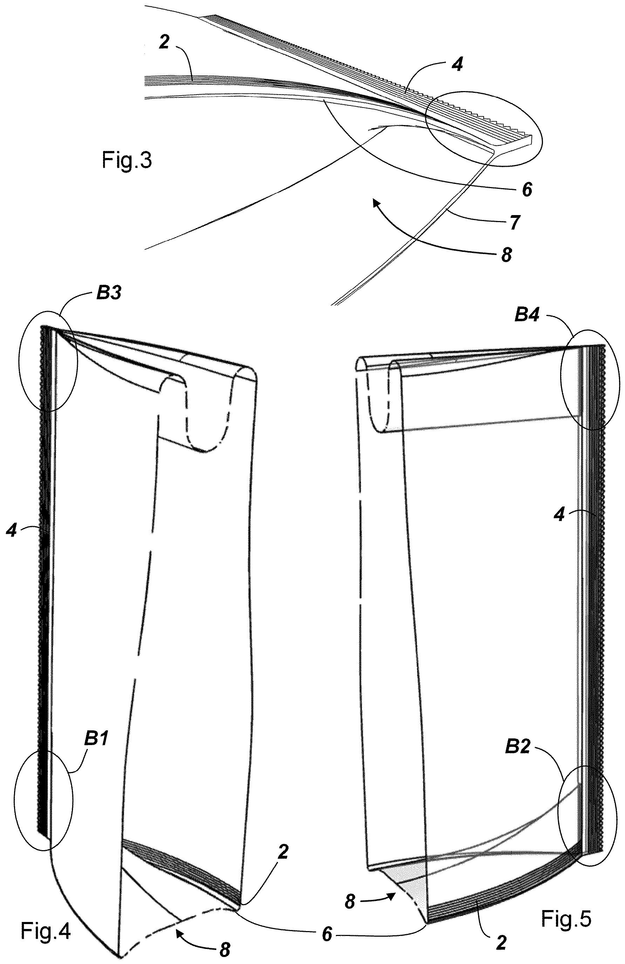

In den Figuren 3, 4 und 5 sieht man die W-Falte 8 am Standboden 5 der Verpackung 1, wobei die W-Falte an den zwei gegenüberliegenden Seitenrändern jeweils zusammengeschweisst ist (siehe umkreiste Bereiche B1 und B2).

Eine solche W-Falte kann, wie in den Figuren gezeigt, ebenfalls am oberen, d.h. dem Standboden gegenüberliegenden, Ende eingearbeitet werden. In den umkreisten Bereichen B3 und B4 ist die W-Falte auch hier zusammengeschweisst. Es ist anzumerken, dass die W-Falte an diesem oberen Ende im gezeigten Beispiel nicht gefalzt ist. Eine Falzung ist am Standboden wie auch hier am oberen Ende optional, und zwar unabhängig voneinander.

In diesen Bereichen der Verschweissungen (B1-B4) sind insbesondere die "Ohren", d.h. die Ausprägungen der W-Falte in diesem Randbereich, speziell für die Verschweissung vorbereitet. So kann etwa in diesen Bereichen der Mattlack ausgespart sein, was zu einer saubereren und zuverlässigeren Verschweissung der PP-Schichten führt.

Eine solche Verpackung, die wenigstens einen Standboden wie den gezeigten Standboden 5 aufweist, kann im Verkaufsladen aufrecht hingestellt werden und spart somit Platz. Es sind auch keine speziellen Böden für die Verpackungen nötig, denn durch den Standboden 5 kann die Verpackung eigenständig stehen.

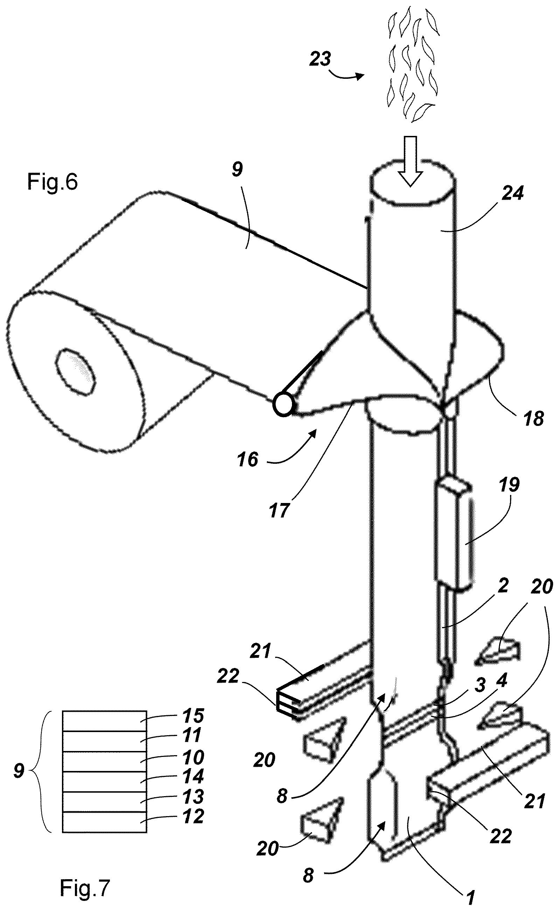

Wie eine solche Verpackung, die zumindest einen Standboden aufweist hergestellt wird, soll im Folgenden anhand von Figur 6 beschrieben werden:

Ein Herstellungsverfahren der erfindungsgemässen Verpackung ist gleichzeitig ein Verfahren zum Verpacken von frischen Pasta in der besagten Verpackung. Zunächst wird kontinuierlich die Folie 9 von einer Rolle zugeführt. Es handelt sich hierbei um die Folie, die erfindungsgemäss Polypropylen und eine Sperrschicht aus Aluminiumoxid oder Siliciumdioxid aufweist, siehe die schematische Schichtenübersicht in Figur 7. Insbesondere ist die Sperrschicht 10 zwischen 5 und 30 nm dünn, wobei die Folie 9 eine erste Polypropylen-Schicht 11 mit einer Dicke von zwischen 5 und 30 µm aufweist. Hierbei ist die Sperrschicht 10 bevorzugt auf die erste Polypropylen-Schicht 11 aufgetragen. Gezeigt ist die Sperrschicht 10 auf der "nach innen" gerichteten Seite der ersten Polypropylen-Schicht 11. Die bevorzugte Schichtenanordnung ist wie gezeigt 15-11-10-14-13-12. Allerdings kann sich in anderen Ausführungsbeispielen die Sperrschicht 10 auch auf der "nach aussen", also zum Verpackungsäusseren geneigten Seite, befinden. Eine weitere Option wäre die Reihenfolge 15-11-14-13-10-12, d.h. die Sperrschicht 10 befindet sich (nach aussen gerichtet) an der zweiten PP-Schicht 12. Die Sperrschicht ist also bevorzugt, aber nicht zwingend, umgeben von den beiden PP-Schichten.

Insbesondere ist die erste Polypropylen-Schicht 11 biaxial orientiert. Die Folie 9 weist insbesondere eine zweite Polypropylen-Schicht 12 auf mit einer Dicke von zwischen 30 und 200 µm. Die zweite Polypropylen-Schicht 12 ist insbesondere mittels einer Kleber-Schicht 13 direkt oder indirekt mit der ersten Polypropylen-Schicht 11 verbunden. Auch die zweite Polypropylen-Schicht 12 kann biaxial orientiert sein. Dazwischen kann sich insbesondere noch eine Druckfarbe-Schicht 14 befinden (die Reihenfolge muss nicht zwingend so sein, wie in Figur 7 dargestellt), mit welcher ein gewünschtes Verpackungsaussehen erzeugt wird. Eine Mattlack-Schicht 15 kann auf die erste Polypropylen-Schicht 11 aufgetragen sein. Befindet sich die Druckfarbe-Schicht 14 zwischen der ersten und zweiten Polypropylen-Schicht 11 und 12, so spricht man vom Konterdruck, und befindet sie sich aber an der Aussenseite (in Bezug auf die Verwendung als Verpackung) der ersten Polypropylen-Schicht 11, so spricht man vom Schöndruck. Der über dem Schöndruck liegende Mattlack 15 ist dann ein sogenannter Haptiklack, der also nicht nur eine optische Funktion hat, sondern auch ein haptische. Anstelle des Mattlacks 15 kann sich natürlich auch ein glänzender (Schutz-)Lack an der Aussenseite befinden.

Die biaxial orientierten Polypropylen-Schichten können beispielsweise durch Blasfolienextrusion und nach dem Stenterverfahren hergestellt werden. Ein oder mehrere Extruder beliefern einen Blaskopf mit der Kunststoffschmelze. Durch Blasluft entsteht am Blaskopf ein Folienschlauch, der durch eine Schlauchzusammenführung zu Walzen geführt wird, die den Schlauch zur unorientierten Folie quetschen. Dann wird die Schicht aber durch Strecken in Längs- und in Querrichtung biaxial orientiert. Nach der Streckung wird die Schicht auf Raumtemperatur abgekühlt und kann dann weiterverarbeitet werden, d.h. mit den anderen Schichten verbunden werden. Biaxial orientierte Polypropylen-Schichten haben hohe mechanische Festigkeiten, eine gute Dimensionsstabilität bei Wärme, eine ansprechende Optik sowie eine ausgezeichnete Planlage. Zum verbesserten Recycling kann die Folie insbesondere transparent sein, aber auch halbtransparente oder weisse Ausführungsformen sind bevorzugt.

Während der Zuführung wird die Folie 9 über eine Formschulter 16 umgeschlagen, sodass ein erster Längsrand 17 der Folie 9 mit einem zweiten Längsrand 18 der Folie zusammengeführt wird. Mit den Längssiegelbacken 19 werden der erste Längsrand 17 und der zweite Längsrand 18 zur schlauchbildenden Längsschweissnaht 2 verschweisst. Nachdem eine zweite Kante 7 des Standbodens 5 gefalzt wurde (nicht dargestellt), werden W-Falten 8 am Standboden 5 zwischen der ersten Kante 6 und der zweiten Kante 7 und analog dazu am oberen Ende durch Eindrücken eines Werkzeugs 20 gefaltet.

Gleichzeitig wird die erste Querschweissnaht 3 mit einem ersten Quersiegelbackenpaar 21 geschweisst, wobei die beiden Quersiegelbacken des ersten Quersiegelbackenpaars 21 jeweils zwei oder drei Längsstege aufweisen, und wobei beim Herstellen der ersten Querschweissnaht 3 die Längsstege der ersten Quersiegelbacke des ersten Quersiegelbackenpaars 21, die Folienlagen (in der Mitte sind es zwei Lagen, an den Rändern jeweils vier Lagen durch die W-Falten) einklemmend, frontal auf die Längsstege der zweiten Quersiegelbacke des ersten Quersiegelbackenpaars 21 stossen. Durch das Verwenden dieser Schweissmethode, gibt es, gerade im Vergleich zur Verwendung von Flach- oder Riffel-Siegelbacken, einen optimalen Druckeintrag und das erfindungsgemässe Folienmaterial kann zuverlässiger und schneller verschweisst werden, was besonders im Bereich der 4-Lagigkeit hinsichtlich der Dichtigkeit der Packung und hinsichtlich einer durchgängigen Verschweissung eine Herausforderung ist. Die Längsstege haben insbesondere ein rundes Profil, wodurch der Druckeintrag nochmals verbessert wird. Die Querschweissnähte erhalten dadurch zwei bzw. drei, insbesondere runde, Rillen entlang der Querschweissnähte.

Wie in Figur 6 zu sehen ist, wird gleichzeitig mit der ersten Querschweissnaht 3 die zweite Querschweissnaht 4 der vorherigen, bereits befüllten Verpackung erzeugt. Ebenfalls wie dargestellt können jetzt die frischen Pasta 23 über das Füllrohr 24 in den Schlauch gelassen werden. Die Verpackung wird also befüllt. Nachdem der Schlauch dann um eine definierte Distanz weitergefahren bzw. die Folie weiter zugeführt wurde wird nun die Querschweissnaht 4 der soeben befüllten Verpackung verschweisst.

Bei jedem Schweissvorgang der Quersiegelbacken wird gleichzeitig die bereits befüllte und verschlossene Verpackung abgetrennt, dies zwischen der ersten Querschweissnaht 3 der nächsten Verpackung und der zweiten Querschweissnaht 4 der bereits befüllten und verschlossenen Verpackung (zur besseren Veranschaulichung ist die Verpackung in Figur 6 nicht abgetrennt dargestellt).

Insbesondere weist die Verpackung gemäss der vorliegenden Erfindung die Folie eine Sauerstoffdurchlässigkeit von unter 2cm³/(m² x 24h x bar) bei 23°C und 75% relativer Feuchtigkeit auf, insbesondere unter 1,5cm³/(m² x 24h x bar). Weiters weist die Verpackung insbesondere eine Wasserdampfdurchlässigkeit von unter 1g/(m² x 24h) bei 23°C und 90% relativer Feuchtigkeit auf, insbesondere unter 0,5g/(m² x 24h). Diese Eigenschaften sind jeweils einerseits der erfindungsgemässen Folie, und insbesondere andererseits auch der vorteilhaften Schweissmethode zu verdanken.

Die Erfindung wurde zwar anhand ihrer bevorzugten Ausführungsform(en) erläutert, doch es können viele weitere Änderungen und Variationen vorgenommen werden, ohne über den Umfang der vorliegenden Erfindung hinauszugehen. Daher ist es vorgesehen, dass die beiliegenden Patentansprüche Änderungen und Variationen abdecken, die im tatsächlichen Umfang der Erfindung enthalten sind.

## Patentansprüche

1. Verpackung (1) für Pasta (23), insbesondere frische Pasta, hergestellt aus einer schweissbaren Folie (9) und aufweisend
eine schlauchbildende Längsschweissnaht (2),
eine erste Querschweissnaht (3) und zweite Querschweissnaht (4), wobei die zwei Querschweissnähte gegenüberliegende Seitenränder der Verpackung bilden,
**dadurch gekennzeichnet, dass** die Folie Polypropylen (11,12) und eine Sperrschicht (10) aus Aluminiumoxid oder Siliciumdioxid aufweist.

2. Verpackung (1) gemäss Anspruch 1, aufweisend einen Standboden (5), wobei die Längsschweissnaht (2) entlang einer ersten Kante (6) des Standbodens verläuft, und wobei die Querschweissnähte (3,4) senkrecht zur Längsschweissnaht verlaufen.

3. Verpackung (1) gemäss einem der vorangehenden Ansprüche, wobei die Sperrschicht (10) eine Dicke von zwischen 5 und 30 nm hat, und wobei die Folie (9) eine erste Polypropylen-Schicht (11) mit einer Dicke von zwischen 5 und 30 µm aufweist.

4. Verpackung (1) gemäss Anspruch 3, wobei die Sperrschicht (10) auf die erste Polypropylen-Schicht (11) aufgetragen ist.

5. Verpackung (1) gemäss Anspruch 3 oder 4, wobei die erste Polypropylen-Schicht (11) biaxial orientiert ist.

6. Verpackung (1) gemäss einem der Ansprüche 3 bis 5, wobei die Folie (9) eine zweite Polypropylen-Schicht (12) mit einer Dicke von zwischen 30 und 200 µm, insbesondere 100 oder 80 µm, aufweist.

7. Verpackung (1) gemäss Anspruch 6, wobei die zweite Polypropylen-Schicht (12) mittels einer Kleber-Schicht (13) mit der ersten Polypropylen-Schicht (11) verbunden ist.

8. Verpackung (1) gemäss Anspruch 6 oder 7, wobei die Folie (9) eine Druckfarbe-Schicht (14) zwischen der ersten Polypropylen-Schicht (11) und der zweiten Polypropylen-Schicht (12) aufweist.

9. Verpackung (1) gemäss einem der Ansprüche 3 bis 8, wobei die Folie (9) eine Mattlack-Schicht (15) aufweist, die auf die erste Polypropylen-Schicht (10) aufgetragen ist.

10. Verpackung (1) gemäss einem der vorangehenden Ansprüche, wobei die Verpackung eine Sauerstoffdurchlässigkeit von unter 2cm³/(m² x 24h x bar) bei 23°C und 75% relativer Feuchtigkeit aufweist, insbesondere unter 1,5cm³/(m² x 24h x bar).

11. Verpackung (1) gemäss einem der vorangehenden Ansprüche, wobei die Verpackung eine Wasserdampfdurchlässigkeit von unter 1g/(m² x 24h) bei 23°C und 90% relativer Feuchtigkeit aufweist, insbesondere unter 0,5g/(m² x 24h).

12. Verpackung (1) gemäss einem der vorangehenden Ansprüche, wobei die Verpackung eine W-Falte (8) am Standboden (5) aufweist, wobei die W-Falte an den zwei gegenüberliegenden Seitenrändern jeweils zusammengeschweisst ist.

13. Verpackung (1) gemäss einem der vorangehenden Ansprüche, wobei die Querschweissnähte (3,4) mit einem ersten Quersiegelbackenpaar (21) und einem zweiten Quersiegelbackenpaar (22) hergestellt sind, insbesondere wobei jede Quersiegelbacke der beiden Quersiegelbackenpaare jeweils einen, zwei oder drei Längsstege aufweist, und wobei beim Herstellen der Querschweissnähte die Längsstege, die Folienlagen einklemmend, jeweils frontal aufeinanderstossen, sodass die Querschweissnähte eine, zwei bzw. drei Rillen aufweisen.

14. Pasta (23), insbesondere frische Pasta, welche in einer Verpackung (1) gemäss einem der vorangehenden Ansprüche verpackt sind.

15. Verfahren zum Verpacken von Pasta (23), insbesondere frischen Pasta, in einer Verpackung (1) gemäss einem der Ansprüche 1 bis 13, aufweisend
kontinuierliche Zuführung der Folie (9) und
während der Zuführung
Umschlagen der Folie, sodass ein erster Längsrand der Folie mit einem zweiten Längsrand der Folie zusammengeführt wird,
Herstellen der schlauchbildenden Längsschweissnaht (2) an dem ersten und zweiten Längsrand der Folie, wobei die Längsschweissnaht eine erste Kante (6) des Standbodens (5) bildet,
Falzen einer zweiten Kante (7) des Standbodens,
Falten einer W-Falte am Standboden durch Eindrücken eines Werkzeugs (20) zwischen der ersten und zweiten Kante,
Herstellen der ersten Querschweissnaht (3) mit einem ersten Quersiegelbackenpaar (21), wobei die beiden Quersiegelbacken des ersten Quersiegelbackenpaars jeweils zwei oder drei Längsstege aufweisen, und wobei beim Herstellen der ersten Querschweissnaht die Längsstege des ersten Quersiegelbackenpaars, die Folienlagen einklemmend, frontal aufeinanderstossen,
Befüllen der Verpackung mit den Pasta,
Herstellen der zweiten Querschweissnaht (4) mit einem zweiten Quersiegelbackenpaar (22), wobei die beiden Quersiegelbacken des zweiten Quersiegelbackenpaars jeweils zwei oder drei Längsstege aufweisen, und wobei beim Herstellen der zweiten Querschweissnaht die Längsstege des zweiten Quersiegelbackenpaars, die Folienlagen einklemmend, frontal aufeinanderstossen und
Abtrennen der Verpackung neben der zweiten Querschweissnaht.
